(19) Europäisches Patentamt
European Patent Office
Office européen des brevets

(11) **EP 1 410 857 B1**

(12) **EUROPÄISCHE PATENTSCHRIFT**

(45) Veröffentlichungstag und Bekanntmachung des Hinweises auf die Patenterteilung:
**17.03.2010  Patentblatt 2010/11**

(51) Int Cl.:
*B21D 28/02* *(2006.01)*  *H02K 15/02* *(2006.01)*

(21) Anmeldenummer: **03021886.1**

(22) Anmeldetag: **27.09.2003**

(54) **Verfahren zur Herstellung ringförmiger Blechpakete für vielpolige elektrische Maschinen**

Method of manufacture of annular shaped lamination stack for multipole electrical machines

Procédé de fabrication de paquets de tôles de forme annulaire pour des machines électriques multipolaires

(84) Benannte Vertragsstaaten:
**DE FR**

(30) Priorität: **15.10.2002  DE 10248129**

(43) Veröffentlichungstag der Anmeldung:
**21.04.2004  Patentblatt 2004/17**

(73) Patentinhaber: **Klinger, Friedrich, Prof. Dr.-Ing.**
**66119 Saarbrücken (DE)**

(72) Erfinder: **Klinger, Friedrich, Prof. Dr.-Ing.**
**66119 Saarbrücken (DE)**

(74) Vertreter: **Bernhardt, Winfrid**
**Patentanwälte Bernhardt**
**Kobenhüttenweg 43**
**66123 Saarbrücken (DE)**

(56) Entgegenhaltungen:
• **PATENT ABSTRACTS OF JAPAN Bd. 1997, Nr. 12, 25. Dezember 1997 (1997-12-25) & JP 09 216020 A (KURODA PRECISION IND LTD), 19. August 1997 (1997-08-19)**

**Beschreibung**

Die Erfindung betrifft ein Verfahren zur Herstellung ringförmiger Blechpakete für vielpolige elektrische Maschinen, insbesondere Generatoren für Windenergieanlagen, bei dem zur Bildung einer Lage des Blechpakets ein Ausstanzungen aufweisender Blechstreifen in Form aneinander hängender Ringsegmente hergestellt und nur an schmalen Verbindungsstellen gebogen wird, wobei an jedem der Segmente eine Vielzahl von Zähnen an einem der Längsränder des Blechstreifens gebildet wird und die schmalen Verbindungsstellen durch Randeinschnitte an den Enden der Ringsegmente hergestellt werden. Die Erfindung betrifft ferner ein Blechpaket gemäß Oberbegriff des Anspruchs 12.

Zum Beispiel aus der US-A-4894905 ist bekannt, zur Herstellung ringförmiger oder spiralförmig gewundener Lagen von Blechpaketen einen geraden Streifen aus Elektroblech, der seitliche Ausstanzungen für die Bildung von Wicklungsnuten aufweist, über seine gesamte Länge in der Streifenebene zu verbiegen. Geringe, beim Biegen "über die hohe Kante" unvermeidbare Verbeulungen des Blechstreifens werden durch Pressen des Blechpakets oder eines zwischenzeitlich gebildeten Teilpakets in Richtung der Ringachse ausgeglichen.

Ein Verfahren bzw. Blechpaket der eingangs erwähnten Art geht aus der EP-A-1120882 sowie der EP-A-1335480 hervor. Die Druckschriften beschreiben einen Blechstreifen, wie er ähnlich aus Fig. 1 der vorliegenden Anmeldung hervorgeht. Der Blechstreifen dient zur Herstellung von Blechpaketen für Generatoren mit einem Innenläufer und außen angeordnetem Stator. Entsprechend sind die Zähne radial nach innen gerichtet. Die Verbindungsstellen liegen derart am Rand des Blechstreifens, dass sie im gebogenen Zustand des Blechstreifens von dem Stator radial nach außen vorstehende Ansätze bilden.

Der Erfindung liegt die Aufgabe zugrunde, die Anwendungsmöglichkeiten dieses bekannten Verfahrens zur Herstellung ringförmiger Blechpakete zu erweitern.

Diese Aufgabe wird durch ein Verfahren gelöst, bei dem die Randeinschnitte an dem den Zähnen abgewandten Längsrand des Blechstreifens und die schmalen Verbindungsstellen jeweils zwischen dem inneren Ende der Randeinschnitte und dem inneren Ende der Zwischenräume zwischen den Zähnen an den aneinander grenzenden Enden der Ringsegmente gebildet werden.

Durch diese Erfindungslösung ergibt sich die Möglichkeit, Blechpakete für große Generatoren mit einem Außenläufer, die Leistungen im Megawattbereich und Paketringdurchmesser von z.B. 10 m aufweisen, nach dem Biegeverfahren herzustellen. Bisher musste mit erheblichem Arbeitsaufwand eine Vielzahl einzelner Blechsegmente ringförmig aufgeschichtet und miteinander verbunden werden. Bei großen Maschinen kann die Zahl der Blechsegmente bis zu 100 000 betragen.

Gemäß der Erfindung werden an den Verbindungsstellen zwischen den Ringsegmenten im Vergleich zur Streifenbreite schmale Biegezonen gebildet, wobei die Ringsegmente in ihrer Form bereits dem zu bildenden ringförmigen Blechpaket entsprechen. Die Breite der Biegezonen ist vergleichbar mit der Gesamtbreite der Blechstreifen, aus denen herkömmlich Blechpakete für entsprechend kleinere Maschinen durch Biegung hergestellt werden.

Vorzugsweise wird der Blechstreifen unter Bildung von Stößen an den Enden der Ringsegmente gebogen, so dass auch außerhalb des Biegebereichs ein geschlossener Eisenring entsteht.

In weiterer vorteilhafter Ausgestaltung der Erfindung wird der Blechstreifen unter Ausübung einer Zugspannung in Streifenlängsrichtung gebogen. Bei dieser Biegung werden die Brücken elastisch und plastisch gedehnt. Durch diese zusätzliche Dehnung der Brücken wird erreicht, dass nach dem Biegen des gestanzten Blechstreifens ein vorgesehener Rasterabstand zwischen den der Bildung von Wicklungsnuten dienenden Ausstanzungen auch an den Verbindungsstellen eingehalten wird.

Die Biegung des Blechstreifens unter Spannung in seiner Längsrichtung bildet die Voraussetzung dafür, den Blechstreifen entsprechend einer bevorzugten Ausführungsform der Erfindung unter Biegung auf eine Tragstruktur in einzelnen Ringen oder spiralförmig aufwickeln zu können. Zweckmäßig wird diese Tragstruktur im Generator weiterverwendet, so dass mit dem Aufwickeln eine komplette, das Blechpaket umfassende Baugruppe des Generators entsteht. Der Aufwand für eine nachträgliche Verbindung des Blechpakets mit einer Tragstruktur entfällt.

Der Blechstreifen kann durch Stanzen eines abschnittsweise vorgeschobenen, vorzugsweise von einer Rolle abgewickelten, Blechstreifenrohlings hergestellt und über eine Pufferschleife zur Aufwicklung gebracht werden. Bei jedem Vorschub lassen sich aus dem Rohling jeweils ein Segment oder auch mehrere Segmente ausstanzen, während der Blechstreifen kontinuierlich aufgewickelt wird. Ein Blechpaket kann aus einem einzigen, spiralförmig gewundenen Streifen hergestellt werden.

Es ist ferner denkbar, gleichzeitig mehrere Blechstreifen, vorzugsweise aneinanderliegend, aufzuwickeln, die von mehreren Stanzstationen zugeführt werden.

In weiterer vorteilhafter Ausgestaltung der Erfindung wird der Blechstreifen auf die Tragstruktur in der Art einer Kette auf ein Kettenrad aufgewickelt, indem an der Tragstruktur gebildete Mitnehmer in Nutausstanzungen oder gesonderte Aussparungen am Rand des Blechstreifens eingreifen. Es versteht sich, dass die Abstände der Mitnehmer am Umfang der Tragstruktur an die Abstände der Aussparungen bzw. Nutausstanzungen, angepasst sind. Sofern das Blechpaket auf der Tragstruktur verbleibt, sorgen die Mitnehmer später für eine Drehmomenteinleitung vom Blechpaket in die Tragstruktur.

Die Mitnehmer an der Tragstruktur können zur Wickelachse derart schräg verlaufen, dass der Blechstreifen unter Bildung eines geschränkten Blechpakets mit zur Wickelachse geneigten Wicklungsnuten aufgewickelt wird.

Zweckmäßig wird die Kreisbogenlänge der Ringsegmente im Vergleich zum Umfang der Wicklung so gewählt, dass die Stöße zwischen den Ringsegmenten in Umfangsrichtung zueinander versetzt angeordnet sind. Diese Maßnahme trägt wesentlich zur Stabilität des Blechpakets bei.

Geringe Verbeulungen beim Biegen können dadurch ausgeglichen werden, dass der aufgewickelte Blechstreifen gleichzeitig mit der Aufwicklung oder/und während Unterbrechungen der Aufwicklung oder/und nach Abschluss der Aufwicklung in Richtung der Wickelachse stellenweise oder über den gesamten Wicklungsumfang zusammengepresst wird.

Die Erfindung soll nun anhand von Ausführungsbeispielen und der beiliegenden, sich auf diese Ausführungsbeispiele beziehenden Zeichnungen näher erläutert werden. Es zeigen:

Fig. 1 einen Blechstreifen, der aus aneinanderhängenden Ringsegmenten besteht,

Fig. 2 einen weiteren, in dem Verfahren nach der Erfindung verwendbaren Blechstreifen,

Fig. 3 ein erstes Ausführungsbeispiel für eine Vorrichtung zur Durchführung des Verfahrens nach der Erfindung,

Fig. 4 eine Detaildarstellung der Vorrichtung von Fig. 3,

Fig. 5 ein zweites Ausführungsbeispiel für eine Vorrichtung zur Durchführung des Verfahrens nach der Erfindung in einer Draufsicht,

Fig. 6 ein drittes Ausführungsbeispiel für eine Vorrichtung zur Durchführung des Verfahrens nach der Erfindung in einem Halbschnitt,

Fig. 7 ein viertes Ausführungsbeispiel für eine Vorrichtung zur Durchführung des Verfahrens nach der Erfindung in einer Schnittdarstellung,

Fig. 8 ein fünftes Ausführungsbeispiel für eine Vorrichtung zur Durchführung des Verfahrens nach der Erfindung, und

Fig. 9 eine Darstellung zur Erläuterung eines Ausführungsbeispiels für das Verfahren nach der Erfindung.

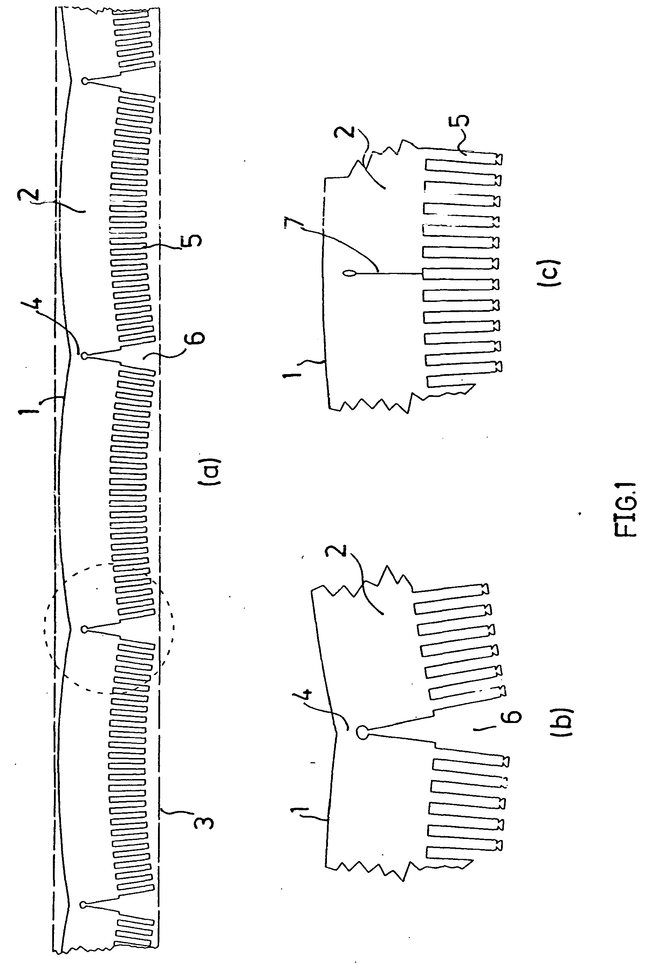

Fig. 1 zeigt einen Blechstreifen 1, der aneinanderhängende Ringsegmente 2 mit Zähnen 5 aufweist, und aus einem breiteren, durch Strichlinien angedeuteten Blechstreifenrohling 3 ausgestanzt ist. Der Blechstreifen 1 besteht aus Elektroblech, das mit einer Isolierbeschichtung versehen ist.

Die durch keilförmige Einschnitte 6 getrennten, identischen Ringsegmente 2 hängen über Verbindungsbrücken 4 zusammen. Die Breite der Brücken ist deutlich kleiner als die Streifen- bzw. Segmentbreite.

Zur Bildung einer Lage eines ringförmigen Blechpakets für einen Generator wird der Streifen 1 in der Streifenebene gebogen, wobei es zu einer elastischen und plastischen Verformung im Bereich der Verbindungsbrücken 4 kommt und die Randseiten der keilförmigen Einschnitte 6 einen Stoß 7 bilden, wie in Fig. 1c gezeigt ist.

Aus dem Blechstreifen 1 gemäß Fig. 1 lässt sich ein Blechpaket mit Nuten am Innenumfang, wie sie bei Ständerpaketen für Innenläufermaschinen benötigt werden, herstellen.

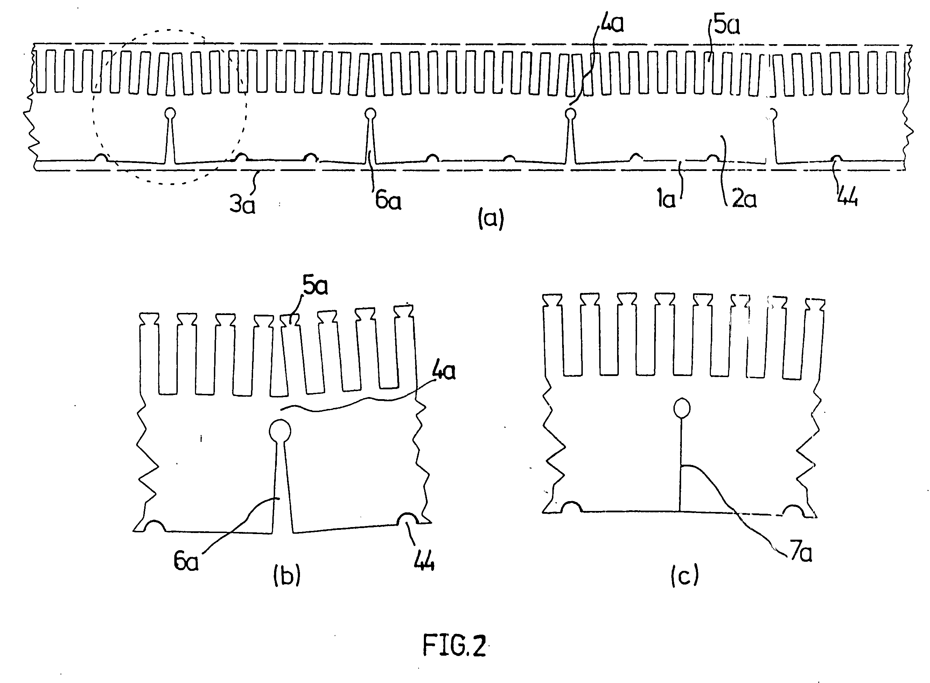

Ein in Fig. 2 gezeigter Blechstreifen 1 a mit Nuten am Außenumfang, wie sie bei Ständerpaketen für Außenläufermaschinen benötigt werden, weist Segmente 2a auf. An einer Zähnen 5a abgewandten Streifenseite sind keilförmige Einschnitte 6a gebildet. Schmale, in der Streifenebene biegbare Verbindungsbrücken 4a liegen zwischen den Einschnitten 6a und den Zähnen 5a. Auf der die Einschnitte 6a aufweisenden Streifenseite sind in einem Rasterabstand Aussparungen 44 gebildet.

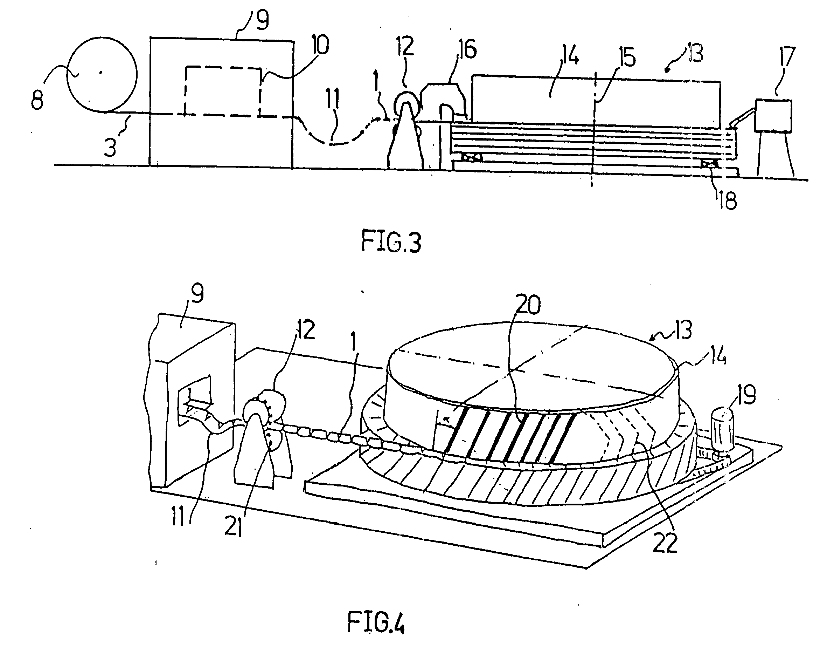

Die genannte Biegung der Blechstreifen 1,1a kann in der in Fig. 3 gezeigten Anlage erfolgen.

Der von einer Rolle 8 abgewickelte Blechstreifenrohling 3 läuft unter taktweisem Vorschub um z.B. eine Segmentlänge in eine Stanzvorrichtung 9 mit einem Stanzwerkzeug 10 ein. Über eine Pufferschleife 11 und eine Spannvorrichtung 12 gelangt der gestanzte Blechstreifen 1 dann in eine Wickelvorrichtung 13, in welcher er unter Biegung der Verbindungsbrücken 4 in der Streifenebene auf eine Tragstruktur 14 aufgewickelt wird, die sich auf einem Lager 18 um eine vertikale Achse 15 dreht.

Während Unterbrechungen der Aufwicklung wird das gebildete Teilpaket durch eine Pressvorrichtung 16 in vertikaler Richtung unter Glättung der gebogenen Lagen zusammengepresst. Der Verbindung der Windungen untereinander dient eine Schweißvorrichtung 17.

Fig. 4 zeigt detaillierter die Wickelvorrichtung 13 und die vorgeordnete Spannvorrichtung 12. Die Pressvorrichtung 16 und die Schweißvorrichtung 17 sind in Fig. 4 nicht dargestellt. An der durch eine Antriebsvorrichtung 19 drehbaren Tragstruktur 14 sind am Außenumfang stegartig vorstehende Mitnehmer 20 gebildet. Die Spannvorrichtung 12 weist Rollen auf, die so ausgebildet sind, dass sie die Segmente bzw. den Blechstreifen 1 formschlüssig halten. Eine in Fig. 4 nicht dargestellte Antriebseinheit bzw. Bremseinheit für die Spannvorrichtung 12 sorgt dafür, dass die Umfangsgeschwindigkeit der Spannrollen im Verhältnis zur Umfangsgeschwindigkeit der Wickelvorrichtung 13 um einen geringen Betrag kleiner bleibt, was zu einer zusätzlichen Dehnung der Brücken 4 zwischen den Segmenten 2 führt. Diese Dehnung wird der Verformung der Brücken 4 beim Biegen überlagert. Die Rasterteilung der Segmente im Streifen 1 wird durch die Dehnung vergrößert, um Toleranzen beim Stanzen der Streifen sowie Toleranzen der Aufwickelvorrichtung dabei auszugleichen, sowie um eine vom Fließverhalten des Streifenmaterials abhängige elastische Vorspannung zu erzeugen. Es empfiehlt sich daher, die unterschiedlichen Umfangsgeschwindigkeiten der Spanneinrichtung 12 und der Wickelvorrichtung 13 entweder durch mechanische, formschlüssige Koppelung der beiden Antriebseinheiten oder durch elektronische Feinregelung der Winkelgeschwindigkeiten beider Antriebe zu realisieren. Die Mitnehmer 20 für den Eingriff in die Zahnung bzw. Aussparungen 44 können schräg zur Drehachse verlaufen. Damit kommen die Zähne 5 bzw. Zahnzwischenräume von Windung zu Windung nicht zur Deckung und beim Aufwickeln entstehen entsprechend schräg verlaufende Wicklungsnuten. Somit wird beim Aufwickeln eine gewünschte Schränkung des Blechpakets erreicht. Strichlinien 22 deuten an, dass zur Bildung einer doppelten Schränkung auch Mitnehmer in Pfeilform vorgesehen sein könnten.

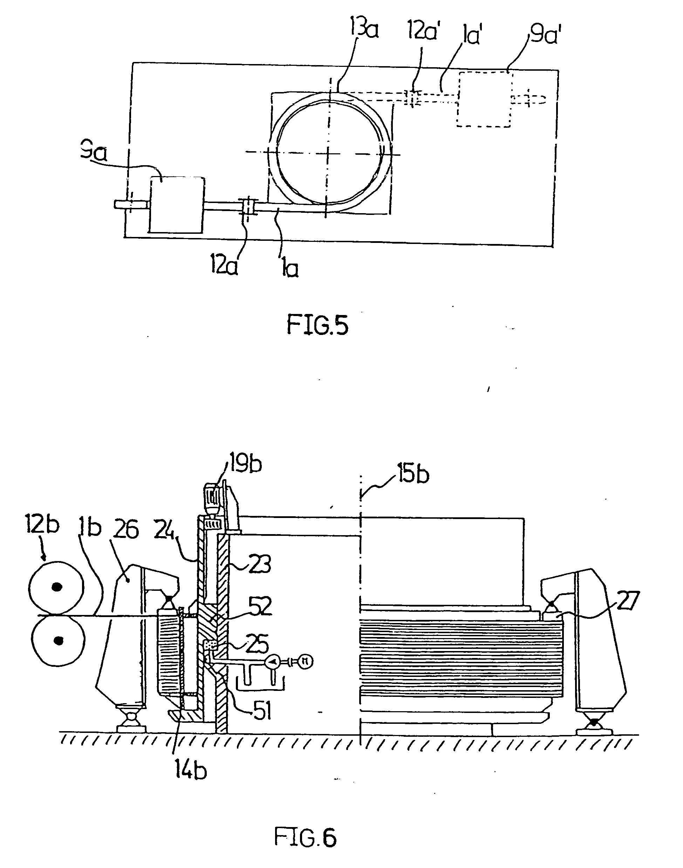

Ein Blechpaket kann zeitsparend unter gleichzeitiger Aufwicklung von zwei oder mehr Blechstreifen gebildet werden. Fig. 5 zeigt in Draufsicht eine Produktionsanlage mit einer Wickelvorrichtung 13a, der gleichzeitig von zwei Stanzvorrichtungen 9a und 9a' ein Blechstreifen 1a bzw. 1a' zugeführt wird, wobei die Blechstreifen gegeneinander zur Anlage kommen.

Fig. 6 zeigt eine weitere Wickelvorrichtung, die einen Innenzylinder 23 und einen Außenzylinder 24 aufweist. Der Außenzylinder 24 kann durch eine Antriebsvorrichtung 19b um den Innenzylinder 23 gedreht werden. Zwischen dem Außenzylinder 24 und dem Innenzylinder 23 ist durch radial entgegengesetzt vorstehenden Ringvorsprünge 51 und 52 eine Hydraulikdruckkammer 25 gebildet, durch die sich der Außenzylinder 24 axial gegen den Innenzylinder 23 verschieben lässt. Auf dem Außenzylinder 24 ist eine Tragstruktur 14b für ein Blechpaket angeordnet. Das Blechpaket kann durch in der Kammer 25 anliegenden Hydraulikdruck an Pressstempel 27 aufweisende Gegenhalter 26 angepresst werden. Die Gegenhalter 26 sind horizontal verschwenkbar, um das fertiggestellte Blechpaket aus der Vorrichtung herausheben zu können.

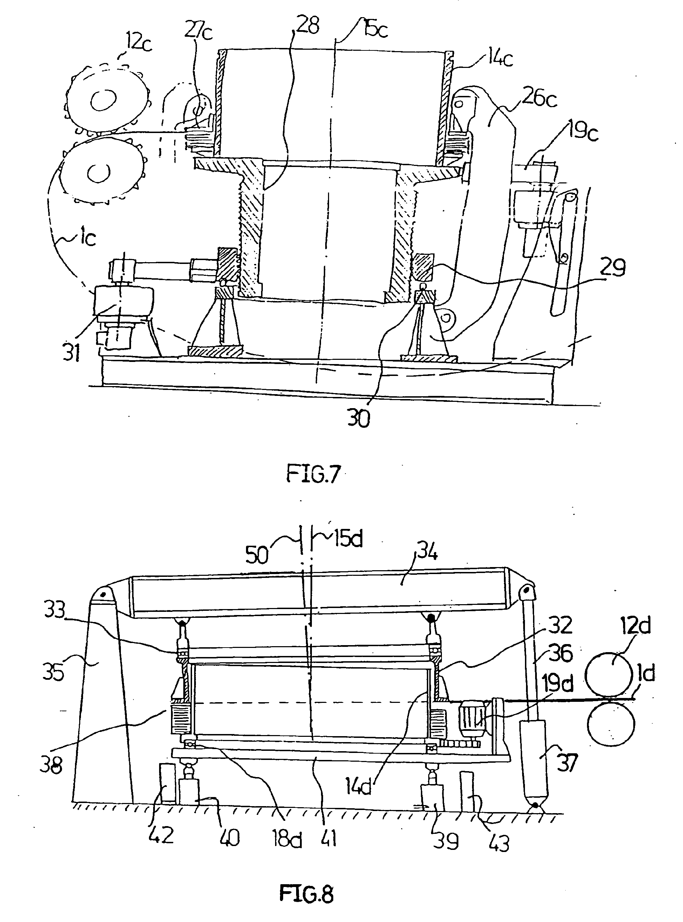

Die Wickelvorrichtung von Fig. 7 weist eine Hohlspindel 28 auf, welche eine Tragstruktur 14c und ein darauf gebildetes Blechpaket trägt. Die Hohlspindel 28 ist über einen Drehantrieb 19c um eine vertikale Achse 15c drehbar. Auf der Spindel dreht sich eine Mutter 29, die ihrerseits um die vertikale Achse 15c auf einem Axiallager 30 drehbar ist. Die Mutter 29 lässt sich über eine Antriebsvorrichtung 31 drehen. Beim Aufwickeln eines Blechstreifens 1c auf die Tragstruktur 14c sind sowohl die Antriebsvorrichtung 19c als auch die Antriebsvorrichtung 31 jeweils mit einer solchen Drehgeschwindigkeit in Betrieb, dass die Spindel ihre Höhe beibehält. Ändert sich das Verhältnis der Drehgeschwindigkeiten und dreht sich z.B. nur die Mutter 29, so verschiebt sich die Spindel 28 vertikal und ein Blechpaket kann an Gegenhalter 26c, die wie die Gegenhalter 26 von Fig. 6 horizontal verschwenkbar sind, angepresst werden.

Fig. 8 zeigt eine Wickelvorrichtung, in der eine Tragstruktur 14d durch eine Antriebsvorrichtung 19d auf einem Lager 18d um eine Achse 15d drehbar ist. Ein ringförmiger Pressstempel 32 ist über ein Lager 33 drehbar an einem Schwenkarm 34 gelagert und der Schwenkarm 34 an einen ersten Vertikalträger 35 und einen zweiten in der Höhe durch einen Hydraulikzylinder 37 verstellbaren Vertikalträger 36 angelenkt. Der um eine Achse 50 drehbare Pressstempel 32 liegt bei 38 während der Aufwicklung eines Blechstreifens ständig gegen das gebildete Blechpaket bzw. Teilpaket an. Die Anpresskraft wird durch Hydraulikzylinder 39 und 40 aufgebracht, welche eine Trägerplatte 41 abstützen. Bei Abschluss der Aufwicklung sitzt die Trägerplatte 41 auf Anschlägen 42 und 43 auf, so dass mit Hilfe des Schwenkarms 34 und des Hydraulikzylinders 37 eine abschließende Gesamtpressung des gebildeten Blechpakets über den gesamten Umfang vorgenommen werden kann.

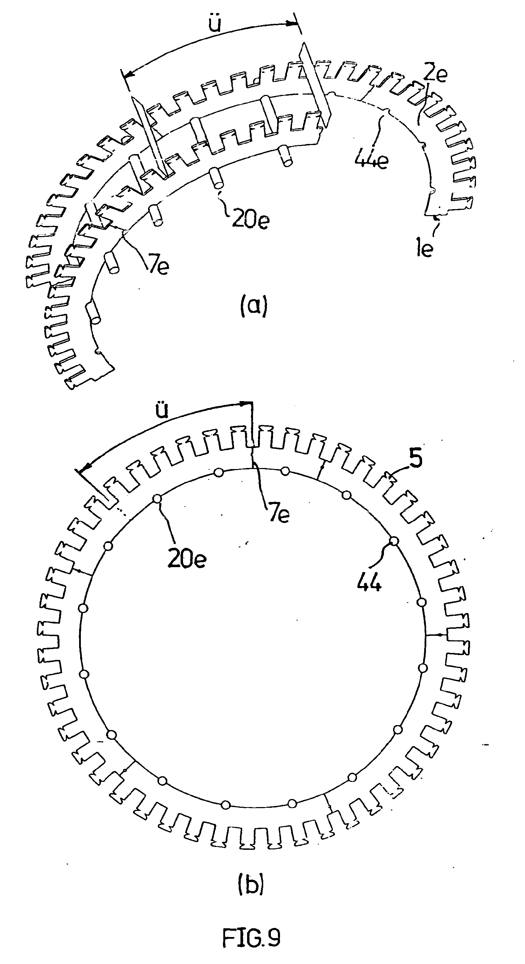

Das vorgeschlagene Verfahren zur Herstellung von Blechpaketen setzt voraus, dass alle Segmente 2e identisch sind. Wie Fig. 9 zeigt, können sie so gestaltet werden, dass die Stöße 7e am Umfang beim Aufwickeln gegeneinander versetzt sind, was die Stabilität des Pakets erhöht und den magnetischen Widerstand verringert. Dabei müssen in der Wicklung sowohl die Zähne 5e als auch Aussparungen 44e jeweils zueinander ausgerichtet sein.

Sind z.B. N = 48 Nuten in einem Paket gefordert, so könnte dieses Paket aus z = 6 Segmenten 2e pro Lage mit n = 8 Nuten pro Segment 2e durch Aufwickeln hergestellt werden. Die Stösse 7 lägen dann jedoch immer an der gleichen Stelle am Umfang.

Verlängert man aber jedes Segment 2e z.B. um eine Nut auf n = 9, so überlappt sich das Ende des sechsten Segmentes mit dem Anfang des ersten um

$$\ddot{u} = n * z - N = 9 * 6 - 48 = 6 \text{ Nuten.}$$

Die kleinste Zahl f von Aussparungen 44e pro Segment 2e, die notwendig ist, damit sich zum Aufwickeln alle Aussparungen 44e decken, ergibt sich dann zu

$$f = n/\ddot{u} * i = 9/6 * 2 = 3$$

wobei i = 1, 2, 3, 4 ... so zu wählen ist, bis f eine ganze Zahl ergibt.

**Patentansprüche**

1.  Verfahren zur Herstellung ringförmiger Blechpakete für vielpolige elektrische Maschinen, insbesondere Generatoren für Windenergieanlagen, bei dem zur Bildung einer Lage des Blechpakets ein Ausstanzungen aufweisender Blechstreifen (1a) in Form aneinander hangende Ringsegmente (2a) hergestellt und nur an schmalen Verbindungsstellen (4a) gebogen wird, wobei an jedem der Ringsegmente (2a) eine Vielzahl von Zähnen (5a) an einem der Längsränder des Blechstreifens gebildet wird und die schmalen Verbindungsstellen (4a) durch Randeinschnitte (6a) an den Enden der Ringsegmente (2a) hergestellt werden,
**dadurch gekennzeichnet,**
**dass** die Randeinschnitte (6a) an dem den Zähnen (5a) abgewandten Längsrand des Blechstreifens (1a) und die schmalen Verbindungsstellen (4a) jeweils zwischen dem inneren Ende der Randeinschnitte (6a) und dem inneren Ende der Zwischenräume zwischen den Zähnen (5a) an den aneinander grenzenden Enden der Ringsegmente (2a) gebildet werden.

2. Verfahren nach Anspruch 1,
**dadurch gekennzeichnet,**
**dass** der Blechstreifen (1) unter Bildung von Stößen (7) an den Enden der Ringsegmente (2) gebogen wird.

3. Verfahren nach Anspruch 1 oder 2,
**dadurch gekennzeichnet,**
**dass** während der Biegung eine Zugspannung in Streifenlängsrichtung erzeugt wird.

4. Verfahren nach Anspruch 3,
**dadurch gekennzeichnet,**
**dass** die Verbindungsstellen (4) bei der Biegung ferner in Streifenlängsrichtung plastisch gedehnt werden.

5. Verfahren nach einem der Ansprüche 1 bis 4,
**dadurch gekennzeichnet,**
**dass** der Blechstreifen unter Biegung an den Verbindungsstellen (4) auf eine, vorzugsweise im Generator weiterverwendete, Tragstruktur (14) gewickelt wird.

6. Verfahren nach einem der Ansprüche 1 bis 5,
**dadurch gekennzeichnet,**
**dass** der Blechstreifen (1) durch Stanzen eines abschnittsweise vorgeschobenen, vorzugsweise von einer Rolle (8) abgewickelten Blechstreifenrohlings (3) hergestellt und über eine Pufferschleife (11) zur Aufwicklung gebracht wird.

7. Verfahren nach Anspruch 5 oder 6,
**dadurch gekennzeichnet,**
**dass** zur Bildung des Blechpakets ein einziger Blechstreifen (1) aufgewickelt wird oder gleichzeitig mehrere Blechstreifen (1a, 1a') vorzugsweise aneinander anliegend, aufgewickelt werden.

8. Verfahren nach einem der Ansprüche 5 bis 7,
**dadurch gekennzeichnet,**
**dass** der Blechstreifen (1) in der Art einer Kette auf ein Kettenrad auf die Tragstruktur gewickelt wird, wobei an der Tragstruktur (14) gebildete Mitnehmer (20) in die zur Bildung von Wicklungsnuten vorgesehenen Ausstanzungen oder Aussparungen (44) an der den Ausstanzungen gegenüberliegenden Streifenseite eingreifen.

9. Verfahren nach Anspruch 8,
**dadurch gekennzeichnet,**
**dass** an der Tragstruktur (14) zur Wickelachse geneigt verlaufende Mitnehmer (20) angebracht werden, so dass der Blechstreifen (1) unter Bildung eines geschränkten Blechpakets aufgewickelt wird.

10. Verfahren nach einem der Ansprüche 5 bis 9,
**dadurch gekennzeichnet,**
**dass** der aufgewickelte Blechstreifen (1) gleichzeitig mit der Aufwicklung oder/und während Unterbrechungen der Aufwicklung oder/und nach Abschluss der Aufwicklung in Richtung der Wickelachse (15) stellenweise oder über den gesamten Wicklungsumfang zusammengepresst wird.

11. Verfahren nach einem der Ansprüche 8 bis 10,
**dadurch gekennzeichnet,**
**dass** die Zahlen der Nutausstanzungen und Aussparungen (44e) je Segment (2e) so gewählt sind, dass sich die Segmente (2e) überlappen, damit die Stöße (7e) im Paket am Umfang zueinander versetzt sind und die Nutausstanzungen und Aussparungen jeweils zueinander fluchten.

12. Blechpaket für einen vielpoligen Generator, mit Lagen aus Elektroblech, die einen Blechstreifen (1a) mit Ausstanzungen für die Bildung von Wicklungsnuten aufweisen, wobei der Blechstreifen (1a) aus aneinander hängenden Ringsegmenten (2a) besteht und nur an schmalen Verbindungsstellen (4a) zwischen den Ringsegmenten (2a) in der Streifenebene gebogen ist, wobei jedes der Ringsegmente (2a) eine Vielzahl von Zähnen (5a) an einem der Längsränder des Blechstreifens (1a) aufweist und die schmalen Verbindungsstellen (4a) durch Randeinschnitte (6a) in den Blechstreifen (1 a) an den Enden der Ringsegmente (2a) gebildet sind,
**dadurch gekennzeichnet,**
**dass** die Randeinschnitte (6a) an dem den Zähnen (5a) abgewandten Längsrand des Blechstreifens (1a) und die schmalen Verbindungsstellen (4a) jeweils zwischen dem inneren Ende der Randeinschnifite (6a) und dem inneren Ende der Zwischenräume zwischen den Zähnen (5a) an den aneinander grenzenden Enden der Ringsegmente (2a) gebildet sind.

## Claims

1. Method for production of annular laminated cores for multipole electrical machines, in particular generators for wind energy installations, in which a laminate strip (1a), which has stamped-out areas in order to form one layer of the laminated core is produced in the form of mutually attached ring segments (2a) and is bent only at narrow connection points (4a), wherein a multiplicity of teeth (5a) are formed on one of the longitudinal edges of the laminate strip on each of the ring segments (2a), and the narrow connection points (4a) are produced by edge incisions (6a) at the ends of the ring segments (2a), **characterized in that** the edge incisions (6a) are formed on that longitudinal edge of the laminate strip (1a) which faces away from the teeth (5a), and the narrow connection points (4a) are each formed between the inner end of the edge incisions (6a) and the inner end of the intermediate spaces between the teeth (5a), at the mutually adjacent ends of the ring segments (2a).

2. Method according to Claim 1, **characterized in that** the laminate strip (1) is bent at the ends of the ring segments (2), forming abutments (7).

3. Method according to Claim 1 or 2, **characterized in that** a tensile stress is produced in the strip longitudinal direction during the bending process.

4. Method according to Claim 3, **characterized in that** the connection points (4) are furthermore plastically stretched in the strip longitudinal direction during the bending process.

5. Method according to one of Claims 1 to 4, **characterized in that** the laminate strip is wound onto a supporting structure (14), which is preferably also used in the generator, and is bent at the connection points (4).

6. Method according to one of Claims 1 to 5, **characterized in that** the laminate strip (1) is produced by stamping a laminate strip blank (3) which is pushed forward in sections and has preferably unwound from a roll (8), and is wound up via a buffer loop (11).

7. Method according to Claim 5 or 6, **characterized in that**, in order to form the laminated core, a single laminate strip (1) is wound up or a plurality of laminate strips (1a, 1a') are wound up at the same time, preferably resting on one another.

8. Method according to one of Claims 5 to 7, **characterized in that** the laminate strip (1) is wound onto the supporting structure like a chain onto a cog wheel, wherein drivers (20) which are formed on the supporting structure (14), engage in the stamped-out areas or cutouts (44), which are provided in order to form winding slots, on the strip side opposite the stamped-out areas.

9. Method according to Claim 8, **characterized in that** drivers (20) which run inclined with respect to the winding axis are fitted to the supporting structure (14), such that the laminate strip (1) is wound up forming a crossed-over laminated core.

10. Method according to one of Claims 5 to 9, **characterized in that** the wound-up laminate strip (1) is compressed in places or over the entire winding circumference in the direction of the winding axis (15), at the same time that it is wound up and/or during interruptions in the winding-up process and/or after completion of the winding-up process.

11. Method according to one of Claims 8 to 10, **characterized in that** the numbers of the slot stamped-out areas and cutouts (44e) per segment (2e) are chosen such that the segments (2e) overlap in order that the abutments (7e) are offset with respect to one another on the circumference in the core, and the slot stamped-out areas and cutouts are each aligned with one another.

12. Laminated core for a multipole generator, with layers composed of electrical laminates, which have a laminate strip (1a) with stamped-out areas in order to form winding slots, wherein the laminate strip (1a) comprises ring segments (2a) which are attached to one another and is bent in the strip plane only at narrow connection points (4a) between the ring segments (2a), wherein each of the ring segments (2a) has a multiplicity of teeth (5a) on one of the longitudinal edges of the laminate strip (1a), and the narrow connection points (4a) are formed by edge incisions (6a) into the laminate strip (1a) at the ends of the ring segments (2a), **characterized in that** the edge incisions (6a) are formed on that longitudinal edge of the laminate strip (1a) which faces away from the teeth (5a), and the narrow connection points (4a) are each formed between the inner end of the edge incisions (6a) and the inner end of the intermediate spaces between the teeth (5a), at the mutually adjacent ends of the ring segments (2a).

## Revendications

1. Procédé pour la fabrication de paquets de tôles de forme annulaire pour des machines électriques multipolaires, en particulier des générateurs pour des installations d'énergie éolienne, dans lequel, pour former une couche du paquet de tôles, on fabrique un ruban de tôle (1a) présentant des poinçonnages, sous la forme de segments annulaires (2a) accrochés les uns aux autres, et on le cintre uniquement au niveau des emplacements de jonction étroits (4a), et sur chacun des segments annulaires (2a) on forme une pluralité de dents (5a) sur l'une des bordures longitudinales du ruban de tôle, et les emplacements de jonction étroits (4a) sont produits par des entailles de bordure (6a) aux extrémités des segments annulaires (2a),

**caractérisé en ce que**

les entailles de bordure (6a) sont formées sur la bordure longitudinale du ruban de tôle (1a) détourné des dents (5a), et les emplacements de jonctions étroits (4a) sont réalisés respectivement entre l'extrémité intérieure des entailles de bordure (6a) et l'extrémité intérieure des intervalles entre les dents (5a) sur les extrémités mutuellement adjacentes des segments annulaires (2a).

2. Procédé selon la revendication 1,
   **caractérisé en ce que** le ruban de tôle (1) est cintré en formant des aboutements (7) aux extrémités des segments annulaires (2).

3. Procédé selon la revendication 1 ou 2,
   **caractérisé en ce que** l'on produit une contrainte de traction dans la direction longitudinale du ruban pendant le cintrage.

4. Procédé selon la revendication 3,
   **caractérisé en ce que** les emplacements de jonction (4) sont en outre allongés de manière plastique dans la direction longitudinale du ruban lors du cintrage.

5. Procédé selon l'une des revendications 1 à 4,
   **caractérisé en ce que** le ruban de tôle est embobiné, avec cintrage au niveau des emplacements de jonction (4), sur une structure porteuse (14), de préférence aussi utilisée dans le générateur.

6. Procédé selon l'une des revendications 1 à 5,
   **caractérisé en ce que** le ruban de tôle (1) est fabriqué par estampage d'une ébauche de ruban de tôle (3) déplacée tronçon par tronçon et de préférence déroulée depuis une bobine (8), et est amené à l'enroulement via une boucle tampon (11).

7. Procédé selon la revendication 5 ou 6,
   **caractérisé en ce que**, pour former le paquet de tôles, on enroule un ruban de tôle unique (1), ou on enroule simultanément plusieurs rubans de tôles (1a, 1a'), de préférence appliqués les uns contre les autres.

8. Procédé selon l'une des revendications 5 à 7,
   **caractérisé en ce que** le ruban de tôle (1) est embobiné à la manière d'une chaîne sur une roue à chaîne sur la structure porteuse, de sorte que des éléments d'entraînement (20) formés sur la structure porteuse (14) s'engagent dans les poinçonnages ou dans les échancrures (44) prévu(e)s pour former des rainures de bobinage, sur le côté du ruban à l'opposé des poinçonnages.

9. Procédé selon la revendication 8,
   **caractérisé en ce que** des éléments d'entraînement (20) qui s'étendent de façon inclinée par rapport à l'axe de bobinage sont montés sur la structure porteuse (14), de sorte que le ruban de tôle (1) est embobiné en formant un paquet de tôles en biais.

10. Procédé selon l'une des revendications 5 à 9,
    **caractérisé en ce que** le ruban de tôle embobiné (1) est comprimé simultanément avec l'embobinage et/ou pendant des interruptions de l'embobinage et/ou après terminaison de l'embobinage, en direction de l'axe de bobinage (15), soit par points soit sur la totalité de la périphérie de l'embobinage.

11. Procédé selon l'une des revendication 8 à 10,
    **caractérisé en ce que** l'on choisit le nombre des poinçonnages en rainures et le nombre des échancrures (44e) pour chaque segment (2e) de telle manière que les segments (2e) se chevauchent, afin que les aboutements (7e) soient décalés les uns par rapport aux autres à la périphérie dans le paquet, et les poinçonnages en rainures et les échancrures sont respectivement en alignement mutuel.

12. Paquet de tôles pour un générateur multipolaire, avec des couches de tôle électrique qui comportent un ruban de tôle (1a) avec des poinçonnages pour la formation de rainures de bobinage, ledit ruban de tôle (1a) étant constitué de segments annulaires (2a) accrochés les uns aux autres, et étant cintré uniquement au niveau des emplacements de jonction étroits (4a) entre les segments annulaires (2a) dans le plan du ruban, dans lequel chacun des segments annulaires (2a) comporte une pluralité de dents (5a) sur l'une des bordures longitudinales du ruban de tôle (1a), et les emplacements de jonction étroits (4a) sont formés par des entailles de bordure (6a) dans le ruban de tôle (1a) aux extrémités des segments annulaires (2a),

    **caractérisé en ce que**

    les entailles de bordure (6a) sont formées sur la bordure longitudinale du ruban de tôle (1a) détourné des dents (5a), et les emplacements de jonction étroits (4a) sont formés respectivement entre l'extrémité intérieure des entailles de bordure (6a) et l'extrémité intérieure des espaces intermédiaires entre les dents (5a) aux extrémités mutuellement adjacentes des segments annulaires (2a).

(a)

(b)

(c)

FIG.1

EP 1 410 857 B1

FIG.2

EP 1 410 857 B1

FIG.3

FIG.4

EP 1 410 857 B1

FIG.5

FIG.6

FIG.7

FIG.8

(a)

(b)

FIG.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4894905 A
- EP 1120882 A
- EP 1335480 A